# EUROPEAN PATENT SPECIFICATION

(11) **EP 2 124 571 B1**
(45) Date of publication and mention of the grant of the patent: **09.04.2014**
(21) Application number: 08708821.7
(22) Date of filing: 08.02.2008
(51) Int. Cl.: A01N 57/20, A01N 25/10, A01N 25/02, A01P 13/00

(54) **PROCESS FOR PREPARING AND APPLYING A PESTICIDE OR HERBICIDE SPRAYABLE FORMULATION**
VERFAHREN FÜR DIE ZUBEREITUNG UND ANWENDUNG EINES PESTIZIDS ODER HERBIZIDS IN SPRAYFORM
PROCEDE DE PREPARATION ET D'APPLICATION D'UNE FORMULATION PESTICIDE OU HERBICIDE

(30) Priority: 22.02.2007 GB 0703394
(43) Date of publication of application: 02.12.2009
(73) Proprietor: BASF SE, 67056 Ludwigshafen (DE)
(72) Inventor: ROSE, Simon Alexander Hanson, Bradford West Yorkshire BD10 8WN (GB); HEY, Susan Margaret, Bradford West Yorkshire BD10 8LJ (GB); EARLY, Johanna Elizabeth, Leeds West Yorkshire LS8 2AE (GB)
(74) Representative: Peatfield, Jeremy William
(86) International application number: PCT/EP2008/051547
(87) International publication number: WO 2008/101818

(56) References cited:
- WO-A-00/26160
- WO-A-91/14365
- US-A1- 2002 006 874

## Description

The present invention concerns the preparation of sprayable herbicide formulations having improved spray drift properties. The formulations are particular suitable for applying herbicide to an area of land or a crop area.

It is well known in agriculture to apply various agrochemicals to growing areas by spraying. The growing areas may be crop areas, which can be very large, or smaller growing areas such as those in greenhouses. The agrochemicals applied as sprays include fertilisers, herbicides and pesticides.

Fertilisers can be supplied in various forms, in particular as solid compositions, or as suspensions or solutions of the fertiliser in a liquid. Fertiliser solutions are generally supplied by the manufacturer as an aqueous concentrate in large batches of size around 1 ton in weight. The solutions contain high concentrations, often 10 to 80 wt.% (dry solids), of dissolved inorganic fertiliser.

Herbicides and pesticides can be supplied to the farmer in various forms, for instance as neat liquids, aqueous solutions, aqueous dispersions or slurries of solid herbicide or pesticide. It is normal practice for the manufacturer to supply the farmer with the herbicide or pesticide in the form of a neat liquid or as a high activity solution or slurry. The usual way of applying herbicides or pesticides to an area of land would be by spraying.

Various systems have been devised for convenient dosing of fertilisers, herbicides or pesticides. Spray pumps are well known which spray water from a spray manifold onto the area of land or crop area and which are designed so that concentrated fertiliser solution, herbicide or pesticide can be dosed into the pump, mixed with water before being sprayed.

For some applications it is usual to combine two or more agrochemicals. For instance in the application of herbicides, especially systemic herbicides, it is usual to combine the treatment with a fertiliser, such as for instance ammonium sulphate. The fertiliser stimulates the growth of unwanted plants causing them to take up much more water, together with the herbicide, through the root system. This ensures a more efficient uptake and distribution of herbicide throughout the plant. In this instance the fertiliser may be regarded as an adjuvant in that it increases the efficacy of the herbicide. Thus a fertiliser used in combination with a herbicide is termed a herbicide adjuvant.

During the spraying of fertilisers, herbicides and pesticides it is usual to apply anti-drift agents in order to prevent the formation of fine droplets which could be carried beyond the area intended to be treated. Without the use of anti-drift agents, the spraying of fertilisers, herbicides and pesticides would be inefficient, first of all because there could be inadequate treatment of the land and crop areas intended to be treated and secondly the extraneous spray, if carried beyond the intended treatment zone, could for example be detrimental to other crops, land and water courses.

It is usual to combine the anti-drift agent with either the water which is fed into the spray pumps or to apply it directly into the spray pumps, usually at or shortly after the mixing zone where the water is mixed with the herbicide, pesticide or aqueous fertiliser concentrate. It is important that the spray drift chemical is metered at the correct dose to ensure that extraneous spray is not formed through under dosing or through overdosing the spray angle is too narrow resulting in uneven distribution of the pesticide, herbicide or fertiliser.

Polymers of acrylamide and other ethylenically unsaturated monomers have been used as anti-drift agents. It has been generally accepted that polymers which give optimum spray drift control are either non-ionic (eg acrylamide homopolymer) or have relatively low anionic content (e.g. 5 to 30 wt. %) and also have relatively high intrinsic viscosity, for instance above 6 dl/g. Such polymers tend to form viscous aqueous solutions unless used at low concentration. Normal practice is to mix the polymer powder or reverse phase emulsion form with water directly into the spray tank so as to form an aqueous solution of polymer. However, this has the problem that emulsion polymers can be difficult to activate in this situation and polymer powders take a long time to dissolve. It is sometimes necessary to use more polymer as a result of inefficient dissolution of the polymer. Normally in order to minimise the problems with dissolution it would be usual to use polymers of intrinsic viscosity in the range 6 to 15 dl/g. Typically the water containing the pesticide, herbicide or fertiliser would comprise polymer at a concentration in excess of 0.05wt.%.

WO-A-0026160 describes an aqueous composition containing an inorganic water-soluble compound, typically a fertiliser or herbicide adjuvant especially ammonium sulphate, and a water-soluble anionic polymeric anti-drift agent of intrinsic viscosity at least 6 dl/g. This aqueous concentrate of inorganic compound and anti-drift agent can be added to the spray tank mix of a sprayable herbicide or pesticide formulation. Adding such a composition to the spray tank mix provides a convenient means for incorporating anti drift agent. Nevertheless, in some cases in order to achieve the right degree of spray properties it is necessary to incorporate more of this aqueous fertiliser composition. Although this provides adequate spray characteristics, in some cases this will mean adding more fertiliser than the optimal level required. This is disadvantageous since not only is unnecessary fertiliser is used but also extraneous fertiliser can be washed into the water courses.

US 20040058821 refers to a process and composition for producing ionically balanced polyacrylamide composition. The performance properties are improved when the composition is formulated with highly cationic pesticide systems. When the polymer is anionic a source of nitrogen, such as ammonium salt can be added to balance the ionic properties. This is said to be unnecessary when the polymer is non-ionic. This reference describes that by balancing the ratio of the non-ionic and ionic polyacrylamides with an ionically counterbalanced diluent, a broad range of compatibility with a wide range of pesticide formulations, especially highly cationic pesticide formulations, can be achieved without sacrificing anti drift or deposition enhancement properties. A concentrate containing water-soluble non-ionic and/or anionic acrylamide polymer with ionically counterbalanced diluent, optionally additionally containing herbicide is mentioned.

Descriptions of aqueous concentrates generally containing polymeric deposition aids or anti drift agents containing inorganic salt and in some cases pesticides are described in US 2001 0034304.

US 2004 0211234 describes homogenous agricultural compositions containing at least one fertiliser or oil and at least one deposition agent. The compositions contain lower amounts of nitrogenous fertilisers and by including guar gum and derivatives thereof which are said to provide beneficial spray characteristics.

However, in all the aforementioned systems there will tend to be a difficulty in being able to dissolve sufficient polymer in the concentrate to achieve adequate spray drift in all cases. Furthermore, the types of polymeric anti drift agent will be limited to those which are sufficiently soluble in the compositions to give adequate spray drift properties.

Polymers have been added to sprayable agrochemical formulations for a variety of reasons.

Sprayable formulations containing pesticide or herbicide and a polymer having special rheological properties is described in US 6534563. The polymer is said to improve the anti rebound properties of the formulation.

US 5525575 describes the enhancement of systemic activity of pesticide systems by the incorporation of water-soluble polymers such as non-ionic polyacrylamides that have sufficiently low molecular weight as to have little or no effect on the diluted herbicide spray pattern. The composition may exist as a reverse phase emulsion or dispersions, water-soluble solution, or powder.

WO 2006/087089 describes foliar feed concentrates containing at least one foliar feed plant nutrient, between 800 and 50,000 ppm of water-soluble polymer and between 800 and 250,000 ppm of surfactant. The concentrate is said to form sprayable formulations that have reduced droplet run off.

The objective of the present invention is to provide a method of enhancing spray drift characteristics of a herbicide formulation.

According to the present invention we provide a process of forming a sprayable herbicide formulation having improved spray drift properties comprising the steps of,
i) providing an aqueous concentrate containing herbicide, which is glyphosate or a salt thereof, which is present in the concentrate in an amount of between 20 and 70% by weight of total concentrate, in which the concentrate that contains herbicide contains one or more surfactants in an amount of up to 10 weight% by weight of total composition, in which the one or more surfactants are tallow amine ethoxylates,
ii) providing an aqueous concentrate containing fertiliser, which is ammonium sulphate; which is present in an amount of between 10 and 34% by weight, based on total weight of the concentrate,
iii) forming the sprayable herbicide formulation by combining water, the herbicide and the fertiliser,
wherein the aqueous concentrate of herbicide and the aqueous concentrates of the fertiliser both contain one or more non-ionic polymers formed from acrylamide having an intrinsic viscosity of at least 6 dl/g capable of enhancing spray drift control.

We have found that the process of the present invention in which spray drift control polymer is present in both the herbicide concentrate and also the fertiliser provide improved spray drift control without overdosing by fertiliser or the herbicide. We have also found improved spray drift can be achieved for a given dose of the polymer.

The sprayable herbicide formulation prepared by the process can be applied to an area of land or a crop area by flowing it through a spray distribution equipment such that a spray of said herbicide formulation is thereby formed.

The polymer must be substantially water soluble and in particular is soluble in the aqueous concentrate of fertiliser and also the aqueous concentrate of herbicide. Suitably the polymer will have a solubility in water of at least 5 g in 100 ml and 25°C. Preferably the polymer is substantially linear and is not crosslinked.

Desirably the polymer can be formed from water soluble monomer or monomer blend, usually water soluble ethylenically unsaturated monomer. The water-soluble monomer or monomers desirably should have a solubility in water of at least 5 g/100 ml and 25°C. The polymer is non-ionic.

The polymer will have sufficient molecular weight so as to have a positive effect on spray drift control. The polymers will exhibit an intrinsic viscosity of at least 6 dl/g. More preferably the intrinsic viscosity is at least 8 dl/g, particularly at least 9 dl/g. It may be up to for instance 30 dl/g but generally it is found that the optimum combination of low viscosity of the composition and spray drift control performance is given by polymers having intrinsic viscosity not more than about 22 or 24 dl/g. More preferably still the intrinsic viscosity is between 10 and 20 dl/g. Especially preferred polymers will tend to exhibit intrinsic viscosities are between 13 and 18 dl/g.

Intrinsic viscosity of polymers may be determined by preparing an aqueous solution of the polymer (0.5-1 % w/w) based on the active content of the polymer. 2 g of this 0.5-1% polymer solution is diluted to 100 ml in a volumetric flask with 50 ml of 2M sodium chloride solution that is buffered to pH 7.0 (using 1.56 g sodium dihydrogen phosphate and 32.26 g disodium hydrogen phosphate per litre of deionised water) and the whole is diluted to the 100 ml mark with deionised water. The intrinsic viscosity of the polymers is measured using a Number 1 suspended level viscometer at 25°C in 1 M buffered salt solution. Intrinsic viscosity values stated are determined according to this method unless otherwise stated.

The fertiliser will desirably be in solution in the concentrate. The fertiliser is present at a concentration between 10 and 34 weight%, especially between 15 and 25 wt%.

The fertiliser is ammonium sulphate. This fertiliser also acts as a sequesting agent or water conditioner in that it is capable of neutralising the effect of divalent cations, such as calcium, that can reduce the activity of various systemic herbicides, such as glyphosate.

Suitably the amount of polymer dissolved in the concentrate containing fertiliser may be up to 3 or 4% based on total weight of concentrate, depending upon the particular polymer type. Preferably this will be up to 2% by weight. Generally the amount of polymer will be at least 0.25% and usually at least 0.5%. More preferably the polymer will be present in the concentrate in amount of between 0.9% and 2%.

The aqueous fertiliser concentrate can be made in any convenient manner. For instance polymer may be added to water followed by fertiliser or the two may be added simultaneously. Alternatively, fertiliser may be added to a preformed solution of polymer. However, generally it is preferred that polymer is added in solid form, ie powder or bead. It is possible to add it in other forms, such as reverse phase dispersion, but solid is preferred. Preferred solids are in the size range 70 to 2,000 microns and are made in a standard manner, for instance by suspension polymerisation to provide polymer in bead form or by solution polymerisation, followed by comminution and drying, to provide polymer in powder form.

The thus formed concentrate should have viscosity which renders the composition easy to handle. It should in particular be easy to handle (i.e. preferably pumpable or pourable) in the equipment which is presently used for feeding it to the tank mix. The polymer may be added to the fertiliser at the facility of the fertiliser manufacturer and thus the viscosity should be low enough that the resulting solution can be handled by equipment presently in place in such facilities. Preferably viscosity is below 3,000 cPs, more preferably not more than 1,000 cPs. In particular it is not more than 500 and especially not more than 250 cPs. Particularly preferably it is not more than 100 cPs. Usually it is in the range of 5 to 50 cPs, preferably 10 to 30 cPs, more preferably in the range 15 to 20 cPs. In this specification viscosity is measured using a Brookfield LVT viscometer using spindle 4 at 30 rpm.

In forming the sprayable herbicide formulation the aqueous fertiliser concentrate will usually be diluted at least sevenfold. Typically the aqueous sprayable formulation will comprise below 10 percent of the constituent concentrate. Preferably the concentrate will be diluted to between 0.25 and 5 wt%, more preferably between 0.5 and 4%, in particular between 0.9 and 3 wt%.

The herbicide active ingredient is water-soluble it is generally supplied by the manufacturer as an aqueous concentrate, i.e., a solution of active ingredient in water.

The herbicide active ingredient is suitably present in the concentrate in an amount of up to 80 wt% by weight of total concentrate. Nevertheless this active ingredient may be present in lower amounts, for instance up to 70%. Usually the concentrate will contain at least 10 wt% by weight of herbicide active ingredient. Preferred amounts of active ingredient are between 20 and 70% (200 to 700 g/l).

The aqueous herbicide concentrate will usually contain the polymer in an amount up to 2%, based on total weight of the aqueous concentrate. Generally be amount of polymer should be at least 0.05% by weight and usually at least 0.1 % by weight. Preferably the aqueous concentrate of the herbicide will contain the polymer in an amount between 0.1 and 0.25% by weight.

The polymer included in the herbicide concentrate may be the same or different as that included in the fertiliser concentrate. When it is different the polymer generally still falls into the definition of polymers defined previously in relation to the fertiliser concentrate. Preferably the polymer or polymers included will be the same as those included with the fertiliser concentrate. The use of the same polymers for both the herbicide concentrate and the fertiliser concentrate ensures a greater likelihood of compatibility.

In the herbicide aqueous concentrate one or more surfactants_in an amount of up to 10 weight% by weight of total composition, in which the one or more surfactants are tallow amine ethoxylates is included. Typically the surfactants may improve the droplet bounce characteristics of the droplets formed by spraying the final sprayable formulation. The surfactants desirably will include any water-soluble surfactant that in combination with the polymerwill improve the droplet bounce, provided that it does not have a significant detrimental effect on the spray drift characteristics. The more preferred tallow amine ethoxylates are cationic in the relatively lower pH of the sprayable formulation.

The aqueous herbicide concentrate may contain at least one surfactant in an amount of between 2500 and 250,000 ppm, based on total weight of aqueous concentrate. Preferably the concentrate contains surfactant in an amount between 2500 and 150,000 ppm, more preferably 5000 to 100,000 ppm, in particular between 10,000 and 90,000 ppm based on total weight of the composition.

The surfactant or at least a portion of the surfactant may alternatively be included with the fertiliser concentrate or instead with the diluted sprayable formulation.

On dilution the aqueous herbicide concentrate may be diluted at least sevenfold and usually at least tenfold. Typically the aqueous sprayable formulation will comprise below 10 percent of the constituent herbicide concentrate. Preferably the concentrate will be diluted to between 1 and 5 wt%, more preferably between 2 and 3 wt%.

The aqueous herbicide concentrate and fertiliser concentrate may each be combined with the dilution water as separate feeds or alternatively may be combined together prior to mixing with the dilution water. In one form the two concentrates are combined together separately slightly ahead of or directly into a mixing zone within the spray distribution equipment. The two concentrates and dilution water may alternatively be mixed together slightly ahead of or directly into a mixing tank which feeds the spray equipment. In this form the sprayable composition is prepared in a spray tank into which is metered water, the concentrate containing herbicide and the concentrate containing the fertiliser.

The sprayable herbicide formulation formed will typically contain polymer in an amount up to 400 ppm by weight of total formulation. Preferably this will be between 20 and 200 ppm and more preferably between 30 and 150 ppm. In general above 50% by weight of the total polymer in the sprayable formulation will be derived from the fertiliser concentrate. Typically the polymer will be derived from both concentrates between 55% and 90% derived from the fertiliser concentrate and between 10% and 45% derived from the herbicide concentrate. More preferably the fertiliser concentrate contribution is between 60 and 80% and the herbicide concentrate contribution is between 20 and 40%.

We find that the process provides improved spray drift control and minimises the risk of overdosing with either fertiliser or herbicide. Furthermore we find that more effective use of the polymer at a given dose is achieved by combining polymer into both concentrates.

Optimum drift control and droplet capture can be easily achieved using the process in which both fertiliser concentrate and herbicide concentrate contain polymer without the risk of overdosing of the polymer. This is necessary as overdosing of polymer drift control agent can result in a deformation of the spray pattern which would reduce herbicide coverage, resulting in strips of uncontrolled weeds in the field. On the other hand under dosing can result in loss of herbicide due to uncontrolled drifting of the spray pattern. The present invention improves the delivery of the herbicide to the appropriate area of land or crop area.

A particularly preferred sprayable formulation is formed from between 450 and 500 g/l systemic herbicide, glyphosate as the isopropyl amine salt, between 0.125 and 0.15% substantially non-ionic polyacrylamide and having an intrinsic viscosity between 14 and 18 dl/g (especially around 18 dl/g), and between 5 and 10% (especially around 7% weight/weight) surfactant (tallow amine ethoxylate), the balance being formed from water. The product is desirably applied to the spray tank at a rate of between 1 and 5 wt% (especially around 2.5% weight/weight). This formulation is designed to be compatible with and can preferably be used in conjunction with fertiliser ammonium sulphate) concentrate containing 20% weight/weight fertiliser ammonium sulphate) and between 0.5 and 1.5% weight/weight (especially around 1 % by weight) substantially non-ionic polyacrylamide as defined above. The fertiliser concentrate is preferably used at a dose rate of between 0.25 and 0.75% weight/weight in the spray tank. The resulting combination gives excellent spray droplet control and droplet deposition (ie reduced droplet bounce).

The following examples illustrate the invention.

### Example 1

Formulation G1 is a commercially available glyphosate formulation (Glystar Plus) containing 480 g/l glyphosate as the IPA salt and propriety surfactant. The formulation does not contain any polymer.

### Formulation G2 is prepared according to the following recipe

Polymer A is a solid grade polyacrylamide homo polymer with an anionic content of 0% and an intrinsic viscosity of 16 dl/g (Magnafloc 351).

| | |
|---|---|
| Glyphosate IPA technical grade (62% active) | = 66.0 g |
| Polymer A | = 0.135 g |
| Surfactant (TAE 20 mole ethoxylate) | = 7 g |
| Water | = to 100 g |

The above recipe produces a formulation containing 480 g/l

Formulation AMS 1 contains 20% w/w AMS and 1 % w/w polymer A.

Improved mass deposition/reduced spray drift of the formulations is demonstrated by measuring the mass of the composition that is lost when the solution is sprayed under standard conditions.

Test solutions are sprayed into a wind tunnel (dimensions length 3 m, height 2 m, width 2.5 m). A spray head containing a 110° flat fan nozzle is mounted 60cm above the floor. Wind at 6mph (measured at the centre of the tunnel) is generated using a fan placed at a distance of 10 cm behind nozzle. A 2.5 by 3 m collection device is positioned centrally under the spray head such that a 2.8m length of the collection device is down wind from the nozzle. The solution to be tested is placed in a brass spray canister attached to the spray head. The canister, tubing and spray head are then weighed. A source of compressed air is used to expel the test solution through the nozzle at a pressure of 3 bar onto a pre-weighed collection device. The test solutions are sprayed for 135 seconds. The canister and spray head are then reweighed in order to determine the weight of the solution expelled. The collection device is carefully folded and reweighed. The mass of the solution collected is then calculated and used to determine the loss of spray due to drift.

Formulations G1 and G2 were added to the spray tank at a rate of 2.5% v/v whilst formulation AMS1 was added at a rate of 0.5% v/v. Tap water was tested as a control.

**Table 1**

| Glyphosate | Adjuvant | Loss of droplets due to drift (%) |
|---|---|---|
| Water | None | 12.4% |
| G1 | None | 12.3% |
| G2 | None | 9.1 % |
| G1 | AMS1 | 7.8% |
| G2 | AMS1 | 6.6% |

The results show that formulations G2 and AMS1 do not give optimum spray drift control when used separately. When used in conjunction these formulations give optimum drift control.

### Example 2

The average distance that droplets bounce can be determining using the following method.

A Hewlett Packard 214B Pulse generator connected to a piezo-electric disc connected to a flat tipped glass nozzle with an aperture of 5000 µm was used to generate droplets of ∼ 1000 µm in diameter. The glass nozzle tip was mounted 20cm above the leaf surface, which was set at an angle of 45°.

Each droplet was allowed to fall 20cm before impacting with a Pea leaf (variety used in this study was Lincoln pea leaves) and the result is recorded. It is also useful to report these results as the percentage of droplets that would be deflected from an average sized leaf.

**Table 2**

| Glyphosate | Adjuvant | Bounce (cm) | % Droplets deflected |
|---|---|---|---|
| Water | None | 16.5 | 100 |
| G1 | None | 0.7 | 14 |
| G2 | None | 4.4 | 48 |
| G1 | AMS1 | 0.9 | 16 |
| G2 | AMS1 | 0.3 | 4 |

The results show that the combination of formulations G2 and AMS1 gives the optimum reduction in droplet bounce, almost complete capture of the spray droplets was observed for this combination of formulations.

## Claims

1. A process of forming a sprayable herbicide formulation having improved spray drift properties comprising the steps of,
i) providing an aqueous concentrate containing herbicide, which is glyphosate or a salt thereof, which is present in the concentrate in an amount of between 20 and 70% by weight of total concentrate, in which the concentrate that contains herbicide contains one or more surfactants in an amount of up to 10 weight% by weight of total composition, in which one or more surfactants are tallow amine ethoxylates,
ii) providing an aqueous concentrate containing fertiliser, which is ammonium sulphate, which is present in an amount of between 10 and 34% by weight, based on total weight of the concentrate,
iii) forming the sprayable herbicide formulation by combining water, the herbicide and the fertiliser,
wherein the aqueous concentrate of herbicide and the aqueous concentrates of the fertiliser both contain one or more non-ionic polymers formed from acrylamide having an intrinsic viscosity of at least 6 dl/g capable of enhancing spray drift control.

2. A process according to claim 1 in which the aqueous concentrate that contains fertiliser contains up to 2 weight% of the polymer, based on the total weight of the concentrate.

3. A process according to claim 1 or claim 2 in which the concentrate that contains herbicide contains up to 2 weight% of the polymer, based on the total weight of the concentrate.

4. A process according to any preceding claim in which the sprayable formulation is prepared in a spray tank into which is metered water, the concentrate containing herbicide and the concentrate containing the fertiliser.

5. A process of applying herbicide to an area of land or a crop area by forming a sprayable herbicide formulation having improved spray drift properties comprising the steps of,
i) providing an aqueous concentrate containing herbicide, which is glyphosate or a salt thereof, which is present in the concentrate in an amount of between 20 and 70% by weight of total concentrate, in which the concentrate that contains herbicide contains one or more surfactants in an amount of up to 10 weight% by weight of total composition, in which one or more surfactants are tallow amine ethoxylates,
ii) providing an aqueous concentrate containing fertiliser, which is ammonium sulphate, which is present in an amount of between 10 and 34% by weight, based on total weight of the concentrate,
iii) forming the sprayable herbicide formulation by combining water with the concentrates containing the herbicide and the fertiliser,
wherein the aqueous concentrate of herbicide and the aqueous concentrate of the fertiliser both contain one or more non-ionic polymers formed from acrylamide having an intrinsic viscosity of at least 6 dl/g capable of enhancing spray drift control,
and then flowing said sprayable herbicide through spray distribution equipment in order to form a spray of said herbicide formulation.

## Patentansprüche

1. Verfahren zur Bildung einer versprühbaren Herbizidformulierung mit verbesserten Sprühdrifteigenschaften, bei dem man
i) ein wässriges Konzentrat bereitstellt, das Herbizid enthält, bei welchem es sich um Glyphosat oder ein Salz davon handelt, das in dem Konzentrat in einer Menge zwischen 20 und 70 Gew.-% des gesamten Konzentrats vorliegt, wobei das Herbizid enthaltende Konzentrat, ein oder mehrere Tenside in einer Menge von bis zu 10 Gew.-% der gesamten Zusammensetzung enthält, wobei sich bei einem oder mehreren Tensiden um Talgaminethoxylate handelt,
ii) ein wässriges Konzentrat bereitstellt, das Düngemittel enthält, bei welchem es sich um Ammoniumsulfat handelt, das in einer Menge zwischen 10 und 34 Gew.-%, bezogen auf das Gesamtgewicht des Konzentrats, vorliegt,
iii) durch Vereinigen von Wasser, dem Herbizid und dem Düngemittel die versprühbare Herbizidformulierung bildet,
wobei das wässrige Herbizidkonzentrat und das wässrige Konzentrat des Düngemittels beide ein oder mehrere aus Acrylamid gebildete nichtionische Polymere mit einer intrinsischen Viskosität von mindestens 6 dl/g, die zur Verbesserung der Sprühdriftbekämpfung befähigt sind, enthält.

2. Verfahren nach Anspruch 1, bei dem das wässrige Konzentrat, das Düngemittel enthält, bis zu 2 Gew.-% des Polymers, bezogen auf das Gesamtgewicht des Konzentrats, enthält.

3. Verfahren nach Anspruch 1 oder Anspruch 2, bei dem das Konzentrat, das Herbizid enthält, bis zu 2 Gew.-% des Polymers, bezogen auf das Gesamtgewicht des Konzentrats, enthält.

4. Verfahren nach einem der vorhergehenden Ansprüche, bei dem man die versprühbare Formulierung in einem Sprühtank herstellt, in welchen Wasser, das Herbizid enthaltende Konzentrat und das Konzentrat, das das Düngemittel enthält, eindosiert werden.

5. Verfahren zum Ausbringen von Herbizid auf eine Landfläche oder eine Kulturpflanzenfläche durch Bildung einer versprühbaren Herbizidformulierung mit verbesserten Sprühdrifteigenschaften, bei dem man
i) ein wässriges Konzentrat bereitstellt, das Herbizid enthält, bei welchem es sich um Glyphosat oder ein Salz davon handelt, das in dem Konzentrat in einer Menge zwischen 20 und 70 Gew.-% des gesamten Konzentrats vorliegt, wobei das Herbizid enthaltende Konzentrat, ein oder mehrere Tenside in einer Menge von bis zu 10 Gew.-% der gesamten Zusammensetzung enthält, wobei sich bei einem oder mehreren Tensiden um Talgaminethoxylate handelt,
ii) ein wässriges Konzentrat bereitstellt, das Düngemittel enthält, bei welchem es sich um Ammoniumsulfat handelt, das in einer Menge zwischen 10 und 34 Gew.-%, bezogen auf das Gesamtgewicht des Konzentrats, vorliegt,
iii) durch Vereinigen von Wasser mit das Herbizid und das Düngemittel enthaltenden Konzentraten die versprühbare Herbizidformulierung bildet,
wobei das wässrige Herbizidkonzentrat und das wässrige Konzentrat des Düngemittels beide ein oder mehrere aus Acrylamid gebildete nichtionische Polymere mit einer intrinsischen Viskosität von mindestens 6 dl/g, die zur Verbesserung der Sprühdriftbekämpfung befähigt sind, enthält,
und anschließendes Strömenlassen des versprühbaren Herbizids durch eine Sprühverteilungseinrichtung zur Bildung eines Sprays der Herbizidformulierung.

## Revendications

1. Procédé de formation d'une formulation herbicide pulvérisable ayant des propriétés améliorées de dérive de pulvérisation, comprenant les étapes consistant à :
i) fournir un concentré aqueux contenant de l'herbicide, qui est le glyphosate ou un sel de celui-ci, qui est présent dans le concentré selon une quantité comprise entre 20 et 70% en poids de concentré total, où le concentré qui comporte l'herbicide contient un ou plusieurs agents tensioactifs selon une quantité allant jusqu'à 10% en poids du poids de composition totale, où un ou plusieurs agents tensioactifs sont des éthoxylates d'amines de suif,
ii) fournir un concentré aqueux contenant du fertilisant, qui est le sulfate d'ammonium, qui est présent selon une quantité comprise entre 10 et 34% en poids, sur la base du poids total de concentré,
iii) former la formulation herbicide pulvérisable en combinant de l'eau, l'herbicide et le fertilisant,
dans lequel le concentré aqueux d'herbicide et le concentré aqueux de fertilisant contiennent tous deux un ou plusieurs polymères non ioniques formés à partir d'acrylamide ayant une viscosité intrinsèque d'au moins 6 dl/g capables d'améliorer le contrôle de dérive de pulvérisation.

2. Procédé selon la revendication 1, dans lequel le concentré aqueux contenant du fertilisant contient jusqu'à 2% en poids du polymère, sur la base du poids total de concentré.

3. Procédé selon la revendication 1 ou la revendication 2, dans lequel le concentré contenant de l'herbicide contient jusqu'à 2% en poids du polymère, sur la base du poids total de concentré.

4. Procédé selon l'une quelconque des revendications précédentes, dans lequel la formulation pulvérisable est préparée dans une cuve de pulvérisation dans laquelle on dose de l'eau, le concentré contenant de l'herbicide et le concentré contenant le fertilisant.

5. Procédé d'application d'herbicide à une zone de terrain ou une zone de culture, par la formation d'une formulation herbicide pulvérisable ayant des propriétés améliorées de dérive de pulvérisation, comprenant les étapes consistant à :
i) fournir un concentré aqueux contenant de l'herbicide, qui est le glyphosate ou un sel de celui-ci, qui est présent dans le concentré selon une quantité comprise entre 20 et 70% en poids de concentré total, où le concentré qui comporte l'herbicide contient un ou plusieurs agents tensioactifs selon une quantité allant jusqu'à 10% en poids du poids de composition totale, où un ou plusieurs agents tensioactifs sont des éthoxylates d'amines de suif,
ii) fournir un concentré aqueux contenant du fertilisant, qui est le sulfate d'ammonium, qui est présent selon une quantité comprise entre 10 et 34% en poids, sur la base du poids total de concentré,
iii) former la formulation herbicide pulvérisable en combinant de l'eau avec les concentrés contenant l'herbicide et le fertilisant,
dans lequel le concentré aqueux d'herbicide et le concentré aqueux de fertilisant contiennent tous deux un ou plusieurs polymères non ioniques formés à partir d'acrylamide ayant une viscosité intrinsèque d'au moins 6 dl/g capables d'améliorer le contrôle de dérive de pulvérisation,
puis faire s'écouler ledit herbicide pulvérisable par l'intermédiaire d'un équipement de distribution de pulvérisation, afin de former une pulvérisation de ladite formulation herbicide.
